(19) Europäisches Patentamt
European Patent Office
Office européen des brevets

(11) Veröffentlichungsnummer: **0 058 892**
**B1**

(12) **EUROPÄISCHE PATENTSCHRIFT**

(45) Veröffentlichungstag der Patentschrift:
12.06.85

(21) Anmeldenummer: 82101034.5

(22) Anmeldetag: 12.02.82

(51) Int. Cl.⁴: **A 23 N 12/00**, A 23 N 12/08,
F 26 B 3/00, F 26 B 23/02,
F 26 B 25/00, B 02 B 1/08

(54) Verfahren zur Trocknung von Körnerfrüchten mit Warmluft und Anlage zur Durchführung des Verfahrens.

(30) Priorität: 12.02.81 HU 33581

(43) Veröffentlichungstag der Anmeldung:
01.09.82 Patentblatt 82/35

(45) Bekanntmachung des Hinweises auf die Patenterteilung:
12.06.85 Patentblatt 85/24

(84) Benannte Vertragsstaaten:
AT BE CH DE FR GB IT LI LU NL SE

(56) Entgegenhaltungen:
DE - A - 2 207 803
FR - A - 1 497 238
FR - A - 2 150 825
FR - A - 2 465 173
FR - A - 2 472 139
GB - A - 2 056 644
US - A - 4 139 952

(73) Patentinhaber: Malom- és Sütöipari Kutatointézet,
Dombo Vári u. 5-7, H-1117 Budapest XI (HU)

(72) Erfinder: Sòlymos, Làszlò, Dipl.-Ing., II. Labanc u. 16/b,
Budapest (HU)
Erfinder: Szönyi, Nàndor, Dipl.-Ing., Kamaraerdö
Kismartoni u. 4/a, H-2040 Budaörs (HU)

(74) Vertreter: Patentanwälte Viering & Jentschura,
Steinsdorfstrasse 6, D-8000 München 22 (DE)

ACTORUM AG

## Beschreibung

Die Erfindung betrifft ein Verfahren zur Trocknung von Körnerfrüchten mit Warmluft und eine Anlage zur Durchführung dieses Verfahrens.

Die in der grossbetrieblichen Landwirtschaft eingeernteten Körnerfrüchte müssen im allgemeinen vor der Einlagerung getrocknet werden.

Bei bekannten Trocknungsanlagen werden für die Trocknung von 1 t Körnerfrüchte 16,5 kg Brennöl benötigt.

Die Verminderung des Brennölverbrauchs steht im ökonomischen Interesse. Bei den bekannten Trocknungsanlagen wird warme Luft durch die im Trocknungsschacht bewegten Körnerfrüchte geblasen. Die Erwärmung der Trocknungsluft, die aus der Umgebung des Schachttrockners angesaugt wird, erfolgt in einer Heizkammer durch einen mit Brennöl betriebenen Luftheizapparat.

Aus der Heizkammer wird die Warmluft durch ein Warmluftgebläse derart in den Trocknungsschacht eingeblasen, dass möglichst die gesamte Körnerfruchtsäule gleichmässig mit Warmluft behandelt wird.

Nach dem Trocknungsprozess werden die erwärmten Körnerfrüchte mit Kaltluft zurückgekühlt, die durch ein Kühlgebläse ebenfalls aus der Umgebung der Anlage angesaugt und im unteren Teil des Trocknungsschachtes durch die Körnerfrüchte geblasen wird. Die Warmluft wird in der Regel nach dem Trocknungsprozess in die Atmosphäre abgeblasen.

Der bei derartigen Trocknungsprozessen angefallene technologische Staub wird bei bekannten Anlagen zusammen mit der ausgeblasenen Warmluft ebenfalls an die Umgebung abgegeben. Dies führt nicht nur zu erheblichen Umweltverschmutzungen im Umkreis solcher Trocknungsanlagen, sondern hat auch den Nachteil, dass der gesamte, dem technologischen Staub innewohnende Wärmeenergie-Gehalt, das sind immerhin 3000 kcal/kg, und der Wärmeinhalt der Warmluft vollständig verlorengehen.

Durch die Erfindung wird die Aufgabe gelöst, ein umweltfreundliches und energiesparendes Verfahren sowie eine derartige Anlage zur Trocknung von Körnerfrüchten zu schaffen.

Dies wird ausgehend von einem bekannten Verfahren zur Verwertung des Heizwertes des während der Trocknung von Körnerfrüchten mit Warmluft anfallenden technologischen Staubes, wobei die mittels eines Ölbrenners erzeugte Warmluft, durch die eine vorgegebene, durch den Ölbrenner steuernde Thermostaten abgefühlte Trocknungstemperatur in einem Trocknungsschacht eingestellt wird, durch die Körnerfrüchte hindurchgeblasen wird, gemäss der Erfindung dadurch erreicht, dass wenigstens ein Teil des bei der Trocknung anfallenden technologisch bedingten Staubes abgeschieden, in den Ölbrenner dosiert und von diesem verbrannt wird, wobei in Abhängigkeit von der jeweils erforderlichen Trocknungstemperatur die Dosierung des technologischen Staubes in den Ölbrenner und/oder die Ölzufuhr zu dem Ölbrenner gesteuert wird.

Die angegebene Aufgabe wird ausgehend von einer bekannten Anlage zur Durchführung des Verfahrens, die einen an einer Seite offenen Trocknungsschacht und eine Heizkammer mit einem Ölbrenner zur Erzeugung von in den Trocknungsschacht einzuführender Warmluft aufweist, wobei in dem Trocknungsschacht Thermostate angeordnet sind, von denen der Ölbrenner gesteuert ist, gemäss der Erfindung dadurch gelöst, dass die offene Seite des Trocknungsschachtes von einer Verkleidung abgedeckt ist und an den von dieser umgrenzten Raum über einen Staubabscheider, der über eine Dosiereinrichtung an den Ölbrenner angeschlossen ist, ein Sauggebläse angeschlossen ist.

Bei einem Röstverfahren, insbesondere zum Rösten von Kaffee, ist es allerdings bekannt (FR-A-2 150 825) die Warmluft aus der Röstkammer durch ein Gebläse abzusaugen und in einen Ofen zurückzuführen, in welchem die Warmluft, bevor sie in die Röstkammer zurückgeleitet wird, durch einen mit Brennstoff betriebenen Brenner erhitzt wird. Die in den Ofen zurückgeführte Warmluft wird an der Brennerflamme vorbeigeführt, wobei die mit der Warmluft geführten brennbaren Bestandteile, die im wesentlichen aus beim Röstvorgang von Kaffeebohnen in Form von Räutchen anfallenden Teilchen bestehen, zusätzlich verbrannt werden. Die Temperatur der Warmluft wird dadurch gesteuert, dass über Temperaturfühler am Eingang der Röstkammer und in derselben der den Ofen verlassenden Warmluft gesteuert Kaltluft zugeführt wird. Dadurch wird ein Teil des durch die zusätzliche Verbrennung des technologischen Staubes erreichten Energiegewinnes wieder vernichtet. Ausserdem erfolgt bei dem bekannten Verfahren eine Dosierung des technologischen Staubes in den Ofen im Sinne einer Durchsatzsteuerung des jeweils zu verbrennenden Staubes.

Die Erfindung hat den Vorteil, dass der beim Trocknungsvorgang der Körnerfrüchte angefallene technologische Staub auf einfache Weise zunächst abgeschieden und dann verbrannt werden kann. Durch die Verwertung des Wärmeenergie-Gehaltes des technologischen Staubes kann die zur Trocknung der Körnerfrüchte erforderliche Brennölmenge wesentlich reduziert werden. Ausserdem tritt durch die Abscheidung des technologischen Staubes keine Umweltbelastung beim Ablassen der Warmluft in die Atmosphäre auf.

Eine zusätzliche Energieeinsparung kann jedoch dadurch erzielt werden, dass die Warmluft nach dem Trocknungsvorgang zur Verbrennung des abgeschiedenen technologischen Staubes in das Brennersystem für die Warmlufterzeugung zurückgeführt wird. Durch dieses Recycling wird nicht nur der Energiegehalt der Warmluft bzw. des aus Warmluft und Kaltluft gebildeten Luftgemisches wiederverwendet, sondern es wird durch ein derartig geschlossenes System selbst ein Abblasen der ggf. durch die Abscheider nicht abgeschiedenen geringen Staubmengen ausgeschlossen.

Der Staub kann direkt in die ständig vorhandene Flamme des Ölbrenners eingeblasen werden, wobei je nach Bedarf entweder die zu verbrennende Staubmenge oder die zu verbrennende Ölmenge in Abhängigkeit von der vorgegebenen Warmlufttemperatur im Trocknungsschacht gesteuert werden kann.

Für die Qualitätswahrung der getrockneten Körnerfrüchte ist es zweckmässig, die Körnerfrüchte nach dem Trocknungsprozess noch einem Reinigungsverfahren zu unterwerfen. Bei einem derartigen Reinigungsverfahren fällt wiederum eine verhältnismässig grosse Menge an technologischem Staub an, dessen Wärmeenergie-Gehalt ebenfalls ausgenutzt werden kann. Aus diesem Grund schlägt die Erfindung vor, dass die Körnerfrüchte nach der Trocknung gereinigt werden und der bei der Reinigung anfallende technologische Staub ebenfalls in das Brennersystem zurückgeführt wird. Das Zurückführen des technologischen Staubes aus der Reinigungsanlage zur Brenneranlage kann über gesonderte Leitungen direkt erfolgen oder aber über eine Kopplung des Absaugsystems der Trocknungsanlage mit dem der Reinigungsanlage geschehen. Durch die zuletzt genannte Möglichkeit werden keine zusätzlichen Gebläse für die Förderung des Staubes benötigt.

Die Abscheidung des technologischen Staubes kann durch übliche Einrichtungen, wie Siebe erfolgen. Als besonders vorteilhaft hat sich jedoch die Verwendung von sogenannten Zyklonen erwiesen, da derartige Abscheidevorrichtungen besonders preisgünstig, einfach und platzsparend ausgebildet werden können. Ausserdem sind Zyklone nahezu wartungsfrei, da sie keine sich bewegenden Teile aufweisen. Ferner ist der Ausscheidungsgrad, der mindestens 95% beträgt, sehr hoch.

Eine weitere Reduzierung des Brennölbedarfs für die Erzeugung der Warmluft kann dadurch erzielt werden, dass in dem Brennersystem auch der aus Lagerräumen für Körnerfrüchte stammende technologische Staub verbrannt wird.

Bei der erfindungsgemässen Anlage besteht bevorzugt der Abscheider aus wenigstens einem Zyklon und einem an diesem angeschlossenen Austragsorgan. Auf diese Weise genügt es für mehrere hintereinander und/oder parallel geschaltete Zyklone ein einziges Austragsorgan vorzusehen.

Ausser dem im Trocknungsschacht anfallenden technologischen Staub kann — wie bereits vorne erwähnt — auch der in einer dem Trocknungsschacht nachgeschalteten Reinigungsanlage und/oder der in Lagerräumen oder Silos angefallene technologische Staub über gesonderte oder mit der Trocknungsanlage gekoppelte Leitungen zu dem Brennersystem geführt werden. Wenngleich für den Transport des technologischen Staubes aus der Reinigungsanlage oder aus den Lagerräumen gesonderte Sauggebläse vorgesehen sein können, hat es sich als besonders vorteilhaft erwiesen, den in der Reinigungsanlage und in den Lagerräumen anfallenden Staub zusammen mit dem im Trocknungsschacht anfallenden Staub durch ein einziges Gebläse abzuziehen. Sofern zwischen den Lagerräumen und den Abscheidern zu grosse Entfernungen zu überbrücken sind, ist es vorteilhaft, den in den Lagerräumen angefallenen Staub über mechanisch arbeitende Fördersysteme, wie Förderbänder oder Förderschnecken direkt in die Dosiereinrichtung einzugeben.

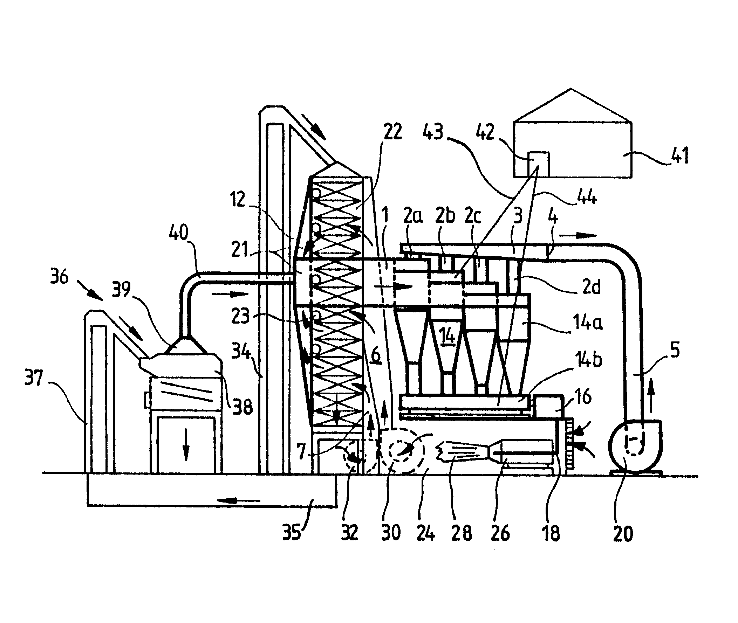

Aus der Zeichnung sind eine Ausführungsform der erfindungsgemässen Anlage und deren Funktionsablaufschema ersichtlich. In der Zeichnung ist durch die durchgehende dünne Linie eine übliche Trocknungsanlage für Körnerfrüchte angedeutet, während durch die durchgehende dicke Linie die erfindungsgemässe Anlage umrissen ist. Durch die gestrichelte Linie sind die bei der erfindungsgemässen Anlage gegenüber den bisher üblichen Anlagen eingesparten Aggregate gekennzeichnet.

Wie aus der Zeichnung ersichtlich, besteht eine herkömmliche Trocknungsanlage aus einem Trocknungsschacht 22, in dem Thermostate 23 angeordnet sein können, aus einer Heizkammer 24 mit einem Ölbrenner 26 und aus einem Warmluftgebläse 30, einem Kaltluftgebläse 32 und einem Hebewerk 34.

Durch das Hebewerk 34 werden die Körnerfrüchte von einer am Boden befindlichen Eingabestelle in den oberen Teil des Trocknungsschachtes 22 gefördert. Von dort rieseln die Körnerfrüchte in dem Trocknungsschacht 22 langsam nach unten. Für den Trocknungsvorgang werden die Körnerfrüchte im Bereich des oberen Teils des Trocknungsschachtes 22 mit Warmluft behandelt und im unteren Teil des Trocknungsschachtes 22 mit Kaltluft zurückgekühlt. Die Warmluft wird von dem Warmluftgebläse 30 und die Kaltluft von dem Kaltluftgebläse 32 über gesonderte Zuführkanäle 6 bzw. 7 geliefert. Die warme Luft wird in der Heizkammer 24 durch den Ölbrenner 26 erwärmt. Die Temperatur der Warmluft im Trocknungsschacht 22 wird von Thermostaten 23 abgefühlt. Die dadurch gewonnenen Messwerte dienen zur automatischen Steuerung des Ölbrenners 26, so dass die Warmluft im Trocknungsschacht 22 in etwa auf einem vorgegebenen Temperaturwert gehalten werden kann. Die für den Trocknungsvorgang benötigte Warmluft wird kontinuierlich aus der Umgebung in die Heizkammer 24 eingesaugt. Nach dem Trocknungsvorgang werden die Warmluft und die Kaltluft, ohne dass sie einer besonderen Behandlung oder Filtration unterworfen werden, an die Umgebung abgeblasen.

Im Gegensatz zu den bekannten Verfahren und der zur Durchführung der bekannten Verfahren erforderlichen Anlagen sind durch das erfindungsgemässe Verfahren u.a. das Warmluftgebläse 30 und das Kaltluftgebläse 32 entbehrlich. Die übrigen Aggregate, wie Trocknungsschacht 22 mit Thermostaten 23, Heizraum 24 mit Ölbrenner 26 und das Hebewerk 34 sind auch für die Durchführung des erfindungsgemässen Verfahrens erforderlich. Ein weiterer wesentlicher Unterschied der erfindungsgemässen Anlage gegenüber den vergleichbaren bekannten Anlagen besteht darin, dass der Trocknungsschacht 22 an seiner offenen Seite mit einer Verkleidung 12 versehen ist und der durch diese Verkleidung 12 umgrenzte Raum bis auf eine Abzugsleitung 1 und den Zuführungen für die Warm- und Kaltluft nahezu vollständig abgeschlossen ist, und dass ferner ein an die Abzugsleitung 1 angeschlossener Abscheider 14 und eine Absaugvorrichtung 20 vorgesehen sind. Der Abscheider 14 besteht aus mindestens einem Zyklon 14a und einem Austragsorgan 14b. Als besonders vorteilhaft hat sich jedoch erwiesen, wie aus der Zeichnung ersichtlich, mehrere Zyklone 14a hintereinander und/oder parallel zueinander zu schalten und für mehrere Zyklone 14a nur ein einziges Austragsorgan 14b vorzusehen. Von dem Austragsorgan 14b gelangt der ausgeschiedene technologische Staub in eine Dosiereinrichtung 16, an die eine Speiseleitung 18 angeschlossen ist. Über die Speiseleitung 18 gelangt der abgeschiedene Staub in den Ölbrenner 26.

Die Speiseleitung 18 kann dabei direkt im Bereich der Brennerflamme münden, so dass der abgeschiedene Staub unmittelbar in die Flamme 28 eingeblasen wird, oder vor der Brennerdüse in die Brennölleitung münden, so dass zur Verbrennung ein Gemisch aus Brennöl und Staub verwendet wird.

Die Luftabsaugleitungen 2a, 2b, 2c der Zyklone 14a münden in einen Saugkanal 3, dessen Querschnitt von der Mündung der ersten Luftabsaugleitung 2a bis zur letzten Luftabsaugleitung 2d zunimmt und an der Stelle 4 schliesslich den Durchmesser der Ansaugleitung 5 aufweist. Die Ansaugleitung 5 mündet direkt in die Absaugvorrichtung 20.

Wie aus der Zeichnung ersichtlich ist dem Trocknungsschacht 22 eine Reinigungsanlage 36 zugeordnet, die im wesentlichen aus einem Zwischenspeicher 35 mit nicht gezeigten Fördermitteln, einer Hebeanlage 37 und einer Reinigungsvorrichtung 38 besteht. Oberhalb der Reinigungsvorrichtung 38 ist eine Absaugeinrichtung 39 angeordnet, die über eine Leitung 40 entweder mit dem Raum 21 oder direkt mit dem Austragsorgan 14b und/oder Dosiereinrichtung 16 verbunden ist.

Schliesslich kann die aus der Zeichnung ersichtliche Trocknungsanlage auch mit einem Lager 41 für Körnerfrüchte derart gekoppelt sein, dass der in dem Lager angefallene technologische Staub über eine Abzugsvorrichtung 42 und damit in Verbindung stehenden Leitungen 43 oder 44 in den Einlauf der Zyklonen 14a bzw. zu dem Austragsorgan 14b gefördert wird. Für die Förderung des Staubes in den Leitungen 43 oder 44 können mechanische Förderanlagen verwendet werden. Es kann jedoch auch für die Förderung dieser Staubmengen durch entsprechende Schaltungen die Absaugvorrichtung 20 eingesetzt werden.

Im folgenden wird die Funktionsweise der erfindungsgemässen Anlage beschrieben. Durch die Absaugvorrichtung 20 wird in dem durch die Verkleidung 12 umgrenzten Raum 21 ein Unterdruck erzeugt. Durch diesen Unterdruck wird zum einen die in dem Heizraum 24 erwärmte Warmluft durch den Kanal 6 in den Trocknungsschacht 22 gesogen und zum anderen wird durch den Sog der Absaugvorrichtung 20 der technologische Staub, beispielsweise Spreurückstände oder dergleichen, über die Abzugsleitung 1 in Richtung zum Abscheider 14 abgesaugt. Durch den Unterdruck in dem Raum 21 wird aber auch über einen Kanal 7 Kaltluft aus der Umgebung in den unteren Bereich des Trocknungsschachtes 22 eingesaugt. Über die Abzugsleitung 1 gelangen auch die noch im unteren Bereich des Trocknungsschachtes 22 schwebenden restlichen Anteile des technologischen Staubes in den Abscheider 14. In den Zyklonen 14a wird der technologische Staub abgeschieden und gelangt dann über das Austragsorgan 14b zu der Dosiereinrichtung 16. Die aus den Zyklonen 14a abgesaugte Luft, die ein Gemisch aus Warmluft und Kaltluft sein kann, gelangt über die Luftabsaugleitungen 2a bis 2d in den Absaugkanal 3 und über die Ansaugleitung 5 schliesslich zur Absaugvorrichtung 20, von der sie entweder in die Atmosphäre abgeblasen oder über eine hier nicht gezeigte Zuleitung in die Heizkammer 24 zurückgeführt werden kann.

Der technologische Staub wird in vorteilhafter Weise aus der Speiseleitung 18 direkt in die Flamme 28 des Brenners 26 eingeblasen. Dadurch wird eine gesonderte, nur für die Verbrennung des Staubes ausgelegte Feuerungsanlage entbehrlich.

Der Ölbrenner 26 wird über Thermostate 23 gesteuert, die dafür sorgen, dass die Temperatur im Trocknungsschacht einen vorgegebenen Wert nicht über- oder unterschreitet. In Abhängigkeit dieser Messdaten wird entweder die Zufuhr des Brennöls und/oder des technologischen Staubes geregelt.

Durch die Absaugvorrichtung 20 kann über die Leitung 40 und den Raum 21 auch direkt der in der Absaugeinrichtung 39 der Reinigungsanlage 36 angefallene technologische Staub abgezogen werden. In diesem Fall werden gesonderte Förderanlagen für den Transport des Staubes von der Absaugeinrichtung 39 zu dem Abscheider 14 entbehrlich.

Ebenso kann der in dem Staubsammler 42 anfallende technologische Staub durch die Saugwirkung der Absaugvorrichtung 20 direkt in den Abscheider 14 bzw. in die Zyklonen 14a transportiert werden. Bei einer grösseren Entfernung zwischen Lager und Trocknungsanlage ist es in der Regel jedoch von Vorteil, wenn die Förderung des in dem Lager 41 angefallenen technologischen Staubes über gesonderte Förderanlagen direkt zu dem Austragsorgan 14b bzw. in die Dosiereinrichtung 16 erfolgt.

Im folgenden werden einige Messdaten wiedergegeben, aus denen die Vorteile des erfindungsgemässen Verfahrens bzw. der zur Durchführung des erfindungsgemässen Verfahrens vorgeschlagenen Anlage ersichtlich sind.

| | | |
|---|---|---|
| Trocknungsleistung | 15 | t/h |
| Leistung des Feuchteentzugs | 2620 | kg/h |
| Wärmeenergie-Bedarf | 1400 | kcal/kg Wasser |
| Heizwert des Brennöls | 10000 | kcal/kg |
| Heizwert des technologischen Staubes | 3000 | kcal/kg |

Im Verlauf der vorgenommenen Messungen konnten ca. 450 kg/h technologischer Staub gewonnen werden. Diese Menge entspricht ca. 3% der durchgelaufenen Körnerfrüchte.

Der Wärmeenergie-Gehalt von 450 kg technologischem Staub entspricht dem von 135 kg Brennöl. Der Brennölbedarf der erfindungsgemässen Anlage betrug 367 kg/h. Somit betrug die Brennöleinsparung 36,8%.

Bei einer Rückführung der mit der Absaugvorrichtung 20 geförderten Luft in die Heizkammer 24 kann die oben genannte Brennöleinsparung nochmals erhöht werden.

Durch die Erfindung wird nicht nur ein energiesparendes Verfahren bzw. eine energiesparende Anlage geschaffen, sondern darüber hinaus die Umwelt weit geringer belastet als es mit den bisherigen Verfahren und Anlagen möglich ist.

**Patentansprüche**

1. Verfahren zur Trocknung von Körnerfrüchten mit Warmluft, wobei die mittels eines Ölbrenners (26) erzeugte Warmluft, durch die eine vorgegebene, durch den Ölbrenner (26) steuernde Thermostaten (23) abgefühlte Trocknungstemperatur in einem Trocknungsschacht (22) eingestellt wird, durch die Körnerfrüchte hindurchgeblasen wird, dadurch gekennzeichnet, dass wenigstens ein Teil des bei der Trocknung anfallenden technologisch bedingten Staubes abgeschieden, in den Ölbrenner (26) dosiert und von diesem verbrannt wird, wobei in Abhängigkeit von der jeweils erforderlichen Trocknungstemperatur die Dosierung des technologischen Staubes in den Ölbrenner (26) und/oder die Ölzufuhr zu dem Ölbrenner (26) gesteuert wird.

2. Verfahren nach Anspruch 1, dadurch gekennzeichnet, dass die Warmluft nach dem Trocknungsvorgang zur Verbrennung des abgeschiedenen technologischen Staubes in den Ölbrenner (26) zurückgeführt wird.

3. Verfahren nach Anspruch 1 oder 2, dadurch gekennzeichnet, dass die Körnerfrüchte nach der Trocknung gereinigt werden und der bei der Reinigung anfallende technologische Staub ebenfalls in den Ölbrenner (26) zurückgeführt wird.

4. Verfahren nach Anspruch 3, dadurch gekennzeichnet, dass der bei der Reinigung anfallende technologische Staub zusammen mit dem bei der Trocknung anfallenden technologischen Staub abgeschieden wird.

5. Verfahren nach einem der Ansprüche 1 bis 4, dadurch gekennzeichnet, dass in dem Ölbrenner (26) auch der aus Lagerräumen (21) für Körnerfrüchte stammende technologische Staub verbrannt wird.

6. Anlage zur Durchführung des Verfahrens nach Anspruch 1, mit einem an einer Seite offenen Trocknungsschacht (22) und einer Heizkammer (24) mit einem Ölbrenner (26) zur Erzeugung von in den Trocknungsschacht (22) einzuführender Warmluft, wobei in dem Trocknungsschacht (22) Thermostate (23) angeordnet sind, von denen der Ölbrenner (26) gesteuert ist, dadurch gekennzeichnet, dass die offene Seite des Trocknungsschachtes (22) von einer Verkleidung (12) abgedeckt ist und an den von dieser umgrenzten Raum (21) über einen Staubabscheider (14), der über eine Dosiereinrichtung (16) an den Ölbrenner (26) angeschlossen ist, ein Sauggebläse (20) angeschlossen ist.

7. Anlage nach Anspruch 6, dadurch gekennzeichnet, dass der Staubabscheider (14) aus wenigstens einem Zyklon (14a) und einem an diesem angeschlossenen, der Dosiereinrichtung (16) vorgeschalteten Austragsorgan (14b) besteht.

8. Anlage nach Anspruch 6 oder 7, bei welcher an den Austritt des Trocknungsschachtes (22) eine Reinigungsanlage (36) für die Körnerfrüchte angeschlossen ist, dadurch gekennzeichnet, dass die Reinigungsanlage (36) an den Staubabscheider (14) angeschlossen ist.

9. Anlage nach Anspruch 8, dadurch gekennzeichnet, dass der Staubabscheider (14) mit der Reinigungsanlage (36) über den von der Verkleidung (12) des Trocknungsschachtes (22) umgrenzten Raum (21) in Verbindung steht.

10. Anlage nach einem der Ansprüche 6 bis 9, dadurch gekennzeichnet, dass an den Staubabscheider (14) auch eine den technologischen Staub eines Lagers (41) für Körnerfrüchte sammelnde Vorrichtung (42) angeschlossen ist.

**Claims**

1. A process for drying cereals in hot air wherein the hot air generated by an oil burner (26) is adjusted to a predetermined drying temperature sensed by thermostats (23) controlling the oil burner (26) located in a drying column (22) through which the cereals are blown through, characterised in that, depending on the technology applied, at least a portion of the dust arising in drying is separated out, dispensed into the oil burner (26) and combusted in the latter, the dispensing of the technological dust into the oil burner (26) and/or the oil supply for the oil burner (26) is regulated in dependence on the drying temperature actually required.

2. A process according to claim 1, characterised in that after the drying process the hot air is recirculated into the oil burner (26) for combusting the separated technological dust.

3. A process according to claim 1 or 2, characterised in that the cereal grains are cleaned after drying and the technological dust generated during cleaning is also recirculated into the oil burner (26).

4. A process according to claim 3, characterised in that the technological dust generated in the course of cleaning is separated out together with the dust generated in the course of drying.

5. A process according to any of claims 1 to 4, characterised in that the technological dust originating from storage spaces (21) for the cereal grains is also combusted in the oil burner (26).

6. Apparatus for carrying out the process according to claim 1, comprising a drying column (22) open on one side thereof, a heating chamber (24) with an oil burner (26) for generating hot air to be conducted into the drying column (22), wherein thermostats (23) controlling the oil burner (26) are arranged in the drying column (22), characterised in that the open side of the drying column (22) is covered by a casing (12) and the space (21) bounded by the casing is connected to a suction fan (20) via a dust separator (14) which is connected via a metering device (16) to the oil burner (26).

7. Apparatus according to claim 6, characterised in that the dust separator (14) consists of at least one cyclone (14a) and a discharging device (14b) connected to the cyclone upstream of the metering device (16).

8. Apparatus according to claim 6 or 7, wherein a cereal cleaning installation (36) is connected to the discharge of the drying column (22), characterised in that the cereal cleaning installation (36) is connected to the dust separator (14).

9. Apparatus according to claim 8, characterised in that the dust separator (14) is connected to the cereal cleaning installation (36) via the space (21) bounded by the casing (12) of the drying column (22).

10. Apparatus according to any of claims 6 to 9, characterised in that the dust separator (14) is also connected to a device (42) for collecting the technological dust originating from a store (41) for cereals.

## Revendications

1. Procédé de séchage de grains à l'aide d'air chaud, dans lequel l'air chaud, qui est produit au moyen d'un brûleur à mazout (26) et à l'aide duquel est ajustée, dans un puits de séchage (22), la température prédéterminée de séchage mesurée par des thermostats (23) commandant le brûleur à mazout (26), est soufflé à travers la masse de grains, caractérisé en ce qu'au moins une partie de la poussière formée pour des raisons d'ordre technologique pendant le séchage est introduite de manière dosée dans le brûleur à mazout (26) pour y être brûlée, cependant que le dosage de la poussière technologique introduite dans le brûleur à mazout (26) et/ou l'amenée de mazout vers le brûleur à mazout (26) sont réglés en fonction de la température requise de séchage.

2. Procédé selon la revendication 1, caractérisé en ce que, afin de brûler la poussière technologique séparée, on recycle l'air chaud vers le brûleur à mazout (26), après l'achèvement du processus de séchage.

3. Procédé selon la revendication 1 ou 2, caractérisé en ce qu'on nettoie les grains après le séchage et qu'on recycle également vers le brûleur à mazout (26) la poussière technologique obtenue lors du nettoyage.

4. Procédé selon la revendication 3, caractérisé en ce que la poussière technologique obtenue lors du nettoyage et la poussière technologique obtenue lors du séchage sont séparées ensemble.

5. Procédé selon une des revendications 1 à 4, caractérisé en ce que, dans le brûleur à mazout (26), on brûle également la poussière technologique obtenue dans des locaux d'emmagasinage (21) des grains.

6. Installation pour la mise en oeuvre du procédé selon la revendication 1, comportant un puits de séchage (22) ouvert sur un côté et une chambre de chauffage (24) pourvue d'un brûleur à mazout (26) pour produire l'air chaud à introduire dans le puits de séchage (22), cependant que des thermostats (23) qui commandent le brûleur à mazout (26) sont disposés dans le puits de séchage, caractérisée en ce que le côté ouvert du puits de séchage (22) est recouvert par un carénage (12) et que l'espace (21) délimité par ledit carénage est relié à un compresseur aspirant (20) par l'intermédiaire d'un séparateur de poussière (14) qui est branché sur le brûleur à mazout (26) par l'intermédiaire d'un dispositif de dosage (16).

7. Installation selon la revendication 6, caractérisée en ce que le séparateur de poussière (14) est constitué par au moins un cyclone (14a) et un organe d'évacuation (14b) relié audit cyclone et disposé en amont du dispositif de dosage (16).

8. Installation selon la revendication 6 ou 7, dans laquelle une installation de nettoyage (36) des grains est reliée à la sortie du puits de séchage (22), caractérisée en ce que l'installation de nettoyage (36) est reliée au séparateur de poussière (14).

9. Installation selon la revendication 8, caractérisée en ce que le séparateur de poussière (14) est relié à l'installation de nettoyage (36) par l'intermédiaire de l'espace (22) délimité par le carénage (12) du puits de séchage (22).

10. Installation selon une des revendications 6 à 9, caractérisée en ce que le séparateur de poussière (14) est relié, en outre, à un dispositif collecteur (42) de la poussière technologique d'un magasin (41) de grains.